# EUROPEAN PATENT APPLICATION

(11) **EP 2 006 827 A2**
(43) Date of publication of application: **24.12.2008**
(21) Application number: 07739853.5
(22) Date of filing: 27.03.2007
(51) Int. Cl.: G09G 3/02, G02B 6/28, G09G 3/20, G09G 5/00, G09G 5/36, G09G 5/38, H04N 5/64

(54) **IMAGE DISPLAY DEVICE**

(30) Priority: 31.03.2006 JP 2006099553
(71) Applicant: Brother Kogyo Kabushiki Kaisha, Nagoya, Aichi 467-8561 (JP)
(72) Inventor: YAMADA, Shoji, Nagoya-shi Aichi 467-8561 (JP)
(74) Representative: Jackson, Martin Peter
(86) International application number: PCT/JP2007/056415
(87) International publication number: WO 2007/116743

(57) **Abstract**

A see-through type image display device is provided to easily designate a displayed virtual image or to easily, quickly and precisely select the same. The image display device projects light of an image to the retina of a viewer while external light is transmitted through the image display device in order for the viewer to recognize a real image due to the external light and a virtual image caused by the light of the image. The image display device includes an indicator rod (12) that is variable in position and direction, an indicator detecting part (14) for detecting the position and direction of the indicator rod (12), and an image display part (18) for generating image information disposing an auxiliary virtual image in response to the position and the direction of the indicator rod (12) along with a display subject of a main virtual image disposed on display coordinates, so that an image light based on the image information is provided to the retina of the viewer.

## Description

### Technical Field

The present invention relates to an image display device having a function of projecting an image light to a retina of a viewer thus allowing the viewer to recognize an image.

### Background Art

Conventionally, as a so-called see-through type display capable of displaying a real image which constitutes an external space and a virtual image which constitutes a display image in combination, there exists a display device which indicates or designates the displayed virtual image using a cursor or a mouse (see patent document 1 (JP-A-2003-85590).

However, such a method which uses the cursor or the mouse is not a method which allows the viewer to designate the displayed virtual image in a natural manner and hence, the operability is poor whereby it is difficult for the viewer to rapidly and accurately designate the displayed virtual image. Further, with the method which uses the cursor or the mouse, it is difficult for the viewer to designate a virtual image object in a stereoscopic image.

### Disclosure of the Invention

The present invention has been made under such circumstances and it is an object of the present invention to provide a see-through type image display device which can perform the designation or the selection of a displayed virtual image more easily, more rapidly and more accurately.

To solve the above-mentioned task, according to one aspect of the present invention, in an image display device allowing a viewer to simultaneously observe a real image formed by an external light and a virtual image formed by an image light by projecting the image light based on image information on a retina of the viewer while allowing the external light to pass through the image display device, the image display device includes an indicator which is capable of changing a position and a direction thereof, an indicator detection part which detects the position and the direction of the indicator and an image display part which forms image information in which an auxiliary virtual image corresponding to the position and the direction of the indicator is arranged on a display coordinate system along with a main virtual image of an object to be displayed and which projects an image light based on the image information on the retina of the viewer.

Due to such a constitution, as an indicator for indicating a virtual image, the indicator capable of changing the position and the direction thereof and, further, an auxiliary virtual image corresponding to the position and the direction of the indicator is displayed in a display image displayed in the image display part and hence, the viewer can easily, rapidly and accurately indicate the virtual image in the image using the indicator.

Further, the indicator detection part may be configured to detect the position and the direction of the indicator in the display coordinate system, and the image display part may include an image information forming apparatus which forms the image information in which the auxiliary virtual image is arranged on the extension of the direction of the indicator from the position of the indicator in the display coordinate system along with the main virtual image of the object to be displayed in the display coordinate system, an optical flux generator which generates an optical flux corresponding to the image information formed by the image information forming apparatus, and an optical system which projects the optical flux on the retina of the viewer.

Due to such a constitution, based on the position and the direction of the indicator in the display coordinate system, the auxiliary virtual image positioned on the extension of the direction of the indicator from the position of the indicator is displayed in the display image. When the auxiliary virtual image is displayed on the extension of the indicator in this manner, the displayed main virtual image can be easily, rapidly and accurately indicated using the indicator.

Further, at least the optical system of the image display part may be mounted on the head wearable part on a head wearable part worn on the head of the viewer.

Due to such a constitution, the viewer can visually recognize the displayed image while moving such as walking.

Further, the image display device may include a head position detection part which detects a position and a direction of the head wearable part, and the image information forming apparatus may be configured to form the image information which arranges the main virtual image at a predetermined position in a reference coordinate system with a predetermined reference point set as the center, changes the position and the direction of the main virtual image in the display coordinate system corresponding to the change of the position and the direction of the head wearable part on the reference coordinate system, and changes the position and the direction of the auxiliary virtual image on the display coordinate system corresponding to the change of the position and the direction of the head wearable part and the change of the position and the directions of the indicator in the reference coordinate system.

Due to such a constitution, the viewer can visually recognize the main virtual image and the auxiliary virtual image in the displayed image as the similar existence as the real image which exists in the reference coordinate system and hence, the operability of the indicator operation can be further enhanced.

Further, the predetermined reference point may be a predetermined point on a real space.

Due to such a constitution, the viewer can treat the main virtual image and the auxiliary virtual image in the displayed image as existence whose reality is similar to the reality of the real image existing in a real space and hence, the operation operability of the indicator operation can be further enhanced.

Further, the image display device may include a reference unit mounted on a portion other than the head which constitutes a human body of the viewer, and the reference unit may be the predetermined reference point.

Due to such a constitution, the displayed image is provided while maintaining the desired arrangement relationship with the specific part of the body (waist portion, wrist or the like) of the viewer which forms a reference point. Such a displayed image providing method has more favorable application than the display using the external space as a reference and, at the same time, there is an advantage in that the system can be constituted of only the device worn by the viewer (without requiring the arrangement of a reference point setting device outside). Even when the viewer moves, the position and the direction of the main virtual image or the auxiliary virtual image in the reference coordinate system can be directly specified with respect to the position of the viewer and hence, the position and the direction of the main virtual image or the auxiliary virtual image in the reference coordinate system can be accurately specified.

Further, the image information forming apparatus may form the image information in which the auxiliary virtual image is arranged in a continuously extending manner from a position of the indicator in the display coordinate system to a predetermined position in the extending direction of the indicator.

Due to such a constitution, by making use of the auxiliary virtual image which is arranged in a continuously extending manner to the predetermined position, when the main virtual image is indicated using the indicator, the virtual image can be extremely easily, rapidly and accurately indicated.

Further, the image information forming apparatus may form the image information in which the auxiliary virtual image is arranged in an intermittently extending manner from a position of the indicator in the display coordinate system to a predetermined position in the extending direction of the indicator.

Due to such a constitution, an area of portion which is concealed behind the auxiliary virtual image is decreased and hence, it is possible to surely grasp the whole viewing field, particularly the situation of the peripheral region at the position to be indicated whereby the indicator exhibits excellent indication operability.

Further, the image display device may include an auxiliary virtual image length setting part which sets a length of the auxiliary virtual image, and the image information forming apparatus may form, when the length of the auxiliary virtual image is set by the auxiliary virtual image length setting part, the image information in which the auxiliary virtual image extends to the predetermined position corresponding to the set length.

Due to such a constitution, depending on the preference of the viewer who uses the indicator or depending on the distance to the virtual image to be indicated from the viewer, the length of the auxiliary virtual image can be set as desired and hence, the operability of the indicator is further enhanced.

Further, the image display device may include an auxiliary virtual image width setting part which sets a width of the auxiliary virtual image, and the image information forming apparatus may form, when the width of the auxiliary virtual image is set by the auxiliary virtual image width setting part, image information in which the auxiliary virtual image having a width corresponding to the set width is arranged.

Due to such a constitution, it is possible to set a width such as a width of the auxiliary virtual image as desired. For example, depending on the preference of the viewer who uses the indicator, or depending on the size of the virtual image to be indicated, the width of the auxiliary virtual image can be set as desired and hence, the operability of the indicator is further enhanced.

Further, the image display device may include a main virtual image designation operation part which designates the main virtual image, and the image information forming apparatus may correlate the main virtual image designated by the main virtual image designation operation part and the auxiliary virtual image, and may change a position and a direction of the main virtual image corresponding to the changes of the position and the direction of the auxiliary virtual image in the display coordinate system.

Due to such a constitution, the main virtual image designated by the indicator can be moved along with the indicator or the auxiliary virtual image and, further, the position and the direction of the main virtual image can be moved corresponding to the position and the direction of the auxiliary virtual image and hence, the main virtual image can be treated as the existence similar to a real image whereby the main virtual image can be moved, for example. Provided that the main virtual image which can become an object to be indicated is movable, even when the object to be indicated is approaching, for example, by moving only the object to be indicated or by moving only things other than the object to be indicated, it is possible to indicate the object to be indicated further accurately.

Further, the image display device may include a main virtual image selection range specifying part which specifies the main virtual image existing within a trajectory of the auxiliary virtual image which moves in the display coordinate system corresponding to the changes of the position and the direction of the indicator, and the image information forming apparatus may change color of the main virtual image specified by the main virtual image selection range specifying part.

Due to such a constitution, when a plurality of objects to be indicates exists, it is possible to easily indicate them collectively and hence, the indicator exhibits the excellent indication operability.

Further, the image information forming apparatus may form the image information in which the trajectory of the auxiliary virtual image which moves in the display coordinate system corresponding to respective changes of the position and the direction of the indicator is formed as a retention image for a predetermined time.

Due to such a constitution, the viewer can visually recognize the present image of the auxiliary virtual image and the retention image and hence, by comparing the present image and the retention image, the viewer can visually recognize slight changes or displacements of the position and the direction of the auxiliary virtual image accurately, easily and rapidly. Accordingly, the indication operability of the indicator is enhanced.

Further, the image information forming apparatus may form, when it is determined that a portion of the auxiliary virtual image contacts a portion of the main virtual image on the display coordinate system, the image information which changes color of the auxiliary virtual image or the main virtual image.

Due to such a constitution, depending on the change of color, the viewer can visually recognize rapidly and easily whether the indication is successful or not, and the viewer can perform indication while feeling the distance to the object to be indicated with reality. Accordingly, the indication operability of the indicator is further enhanced.

Further, the image display device may include a sound source part which, when it is determined that a portion of the auxiliary virtual image contacts a portion of the main virtual image on the display coordinate system, informs the determination using sounds.

Due to such a constitution, even when the indicated object is not visually recognized, it is possible to rapidly and easily recognize that the indication is performed.

Further, the image information forming apparatus forms the image information in which the auxiliary virtual image is arranged at a position which becomes an intersecting point between an extending direction of the indicator from a position of the indicator in the display coordinate system and the main virtual image.

Due to such a constitution, the viewer can usually recognize the indicated portion as a point. There is a case in which it is difficult for the viewer to recognize the indicated object. Such a case may be a case in which a plurality of main virtual images which can be an object to be indicated is provided on the extension of the indicator. However, provided that the indicated portion can be recognized as the point, the viewer can accurately recognize the indicated object and hence, the indicator exhibits excellent indication operability.

Further, the image information forming apparatus may form the image information in which, when it is determined that there is no position which becomes an intersecting point between an extending direction of the indicator from a position of the indicator in the display coordinate system and the main virtual image, the auxiliary virtual image is not displayed.

Due to such a constitution, for example, a case in which, without recognizing that a real image is mistaken as a main virtual image, a situation in which the real image mistaken as the main virtual image is continuously indicated by the indicator can be surely prevented and hence, the indicator is excellent in the indication operability.

Further, the image information forming apparatus may form the image information in which, when it is determined that there is no position which becomes an intersecting point between an extending direction of the indicator from a position of the indicator in the display coordinate system and the main virtual image, a virtual image which informs the determination is arranged on the display coordinate system along with the main virtual image.

Due to such a constitution, the viewer can surely visually recognize that nothing is indicated by the indicator visually and hence, the indicator exhibits excellent indication operability.

Further, the optical system may include a wavefront modulation part which modulates a wavefront curvature of the optical flux and is configured to perform the wavefront modulation corresponding to a depth in the extending direction of the indicator.

Due to such a constitution, an image such as the main virtual image or the auxiliary virtual image can be displayed three-dimensionally.

Further, the image display device may include an auxiliary virtual image color setting part which sets a color of the auxiliary virtual image, and the image information forming apparatus may form, when it is determined that color of the auxiliary virtual image is set by the auxiliary virtual image color setting part, the image information in which the auxiliary virtual image of the set color is arranged along with the main virtual image.

Due to such a constitution, it is possible to set the color of the auxiliary virtual image as desired, and it is possible to display the auxiliary virtual image having a color which is easily visually recognized depending on the color state of the viewing field and hence, the indication operability of the indicator is enhanced.

Further, the indicator detection part may include at least three orthogonally crossed coils for detecting an AC magnetic field generated by an AC magnetic field generator provided to the indicator, and may detect the position and the direction of the indicator based on intensity of the AC magnetic field detected by the three orthogonally crossed coils generated by the AC magnetic field generator.

Due to such a constitution, it is possible to accurately detect the position and the direction of the indicator and hence, an accurate image display can be performed. Accordingly, the indication operability of the indicator is enhanced.

Further, the image display device may be a retinal scanning display in which the optical system includes a scanning part which scans the optical flux two-dimensionally and may project the optical flux scanned by the scanning part on the retina of the viewer.

### Advantageous Effect of the Invention

As an indicator for indicating a virtual image, the indicator capable of changing the position and the direction thereof is used and, further, an auxiliary virtual image corresponding to the position and the direction of the indicator is displayed in a display image displayed in the image display part and hence, the viewer can easily, rapidly and accurately indicate the real image or the virtual image in the image using the indicator.

### Brief Description of the Drawings

Fig. 1(a) is a schematic view showing a using state of an image display device, Fig. 1(b) is a schematic perspective view showing a head mount which constitutes one constitutional part of the image display device, and Fig. 1(c) is a schematic perspective view showing a control unit which constitutes one constitutional part of the image display device;
Fig. 2 is a block diagram showing the constitution of the image display device;
Fig. 3 is a plan view showing a state in which the head mount is mounted;
Fig. 4 is a block diagram showing an image display part provided to the image display device;
Fig. 5 is an explanatory view showing a viewing field of a user of the image display device;
Fig. 6 (a) is an explanatory view showing a viewing field of the user of the image display device, and Fig. 6(b) is an explanatory view showing an operation part of an indicator;
Fig. 7 is an explanatory view showing a viewing field of the user of the image display device;
Fig. 8 is an explanatory view showing a viewing field of the user of the image display device;
Fig. 9 is an explanatory view showing a viewing field of the user of the image display device;
Fig. 10 is an explanatory view showing a viewing field of the user of the image display device; and
Fig. 11 is an explanatory view showing a viewing field of the user of the image display device.

### Explanation of Symbols

- 11:: head mount
- 12:: indicator rod
- 13:: control unit
- 14:: indicator rod detection part
- 15:: head position detection part
- 16:: operation part
- 17:: control part
- 18:: image display part
- 18a:: image light generating part
- 19:: optical scanning part
- 20:: image light generating part
- 21:: image signal supply circuit
- Im:: main virtual image
- Is:: auxiliary virtual image
- M:: user

### Best Mode for Carrying Out the Invention

Hereinafter, an embodiment of an image display device according to the present invention is explained in detail in conjunction with drawings.

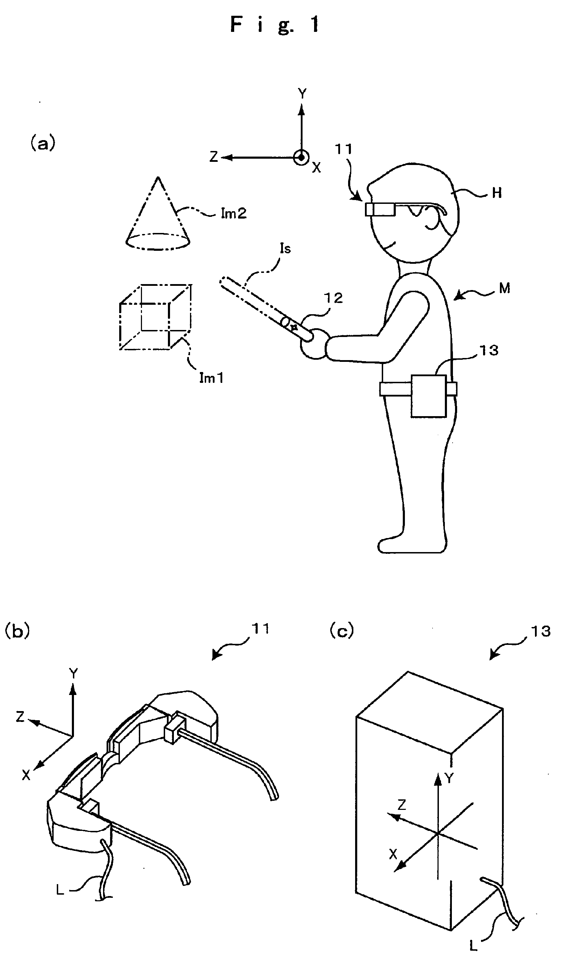

As shown in Fig. 1, the image display device of this embodiment is a so-called see-through type display. The image display device includes, as components thereof, an RSD head wearable unit (hereinafter, referred to as "head mount") 11 used in a state that the head wearable unit is wearable on a head portion H of a user M who is a viewer, an indicator rod 12 (corresponding to one example of an indicator) used in a state that the indicator rod 12 is grasped by the user M, and an RSD controller (corresponding to one example of a reference unit and hereinafter referred to as "control unit") 13 worn on a waist of the user M.

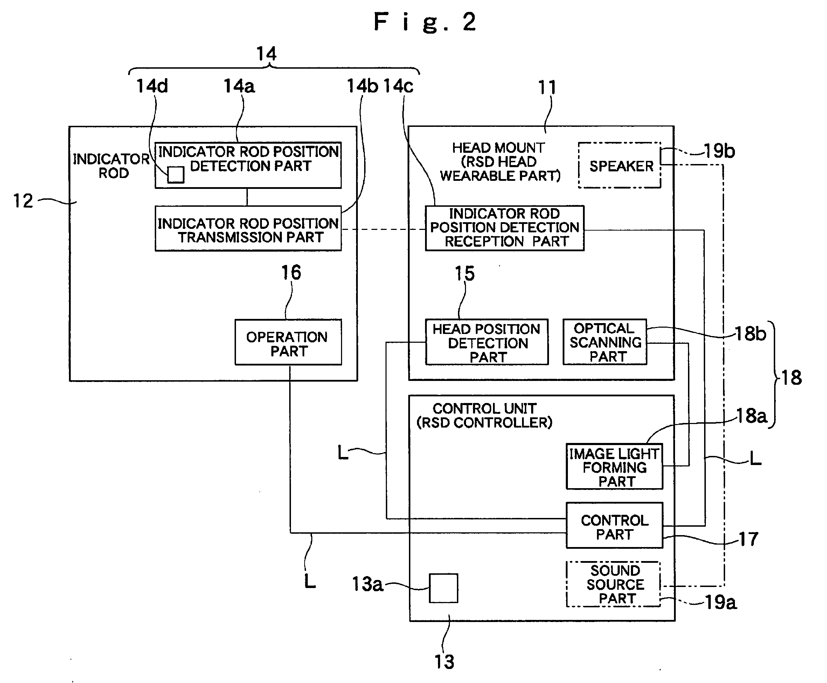

Further, as shown in Fig. 2, the image display device includes following the constitution which is mounted on any one of the above-mentioned head mount 11, the indicator rod 12 and the control unit 13. That is, the image display device includes an indicator rod detection part 14 (corresponding to one example of an indicator detection part) which detects a position and a direction of the indicator rod 12, a head position detection part 15 which detects a position and a direction of the head mount 11, an operation part 16 which is provided for operating the indicator rod 12, a control part 17 which is represented by a CPU or the like which controls the image display device, and an image display part 18 which allows the user M to visually recognize images (a main virtual image Im and an auxiliary virtual image Is described later).

Among these components, the indicator rod detection part 14 includes an indicator rod position detection part 14a mounted on the indicator rod 12 for detecting a position and a direction of the indicator rod 12, an indicator rod position detection transmission part 14b mounted on the indicator rod 12, and an indicator rod position detection reception part 14c mounted on the control unit 13.

The indicator rod position detection part 14a includes a magnetic field receiver 14d having at least three orthogonally crossed coils. The indicator rod position detection part 14a receives an AC magnetic field generated by a magnetic field generator 13a provided to the control unit 13 using the respective orthogonally crossed coils, and detects a position and a direction of the indicator rod 12 based on the detected intensity of the received magnetic field. The indicator rod position detection part 14a inputs signals indicative of the detected position and direction of the indicator rod 12 into the indicator rod position detection transmission part 14b. Here, in this embodiment, the position of the indicator rod 12 in a reference coordinate system which uses a position of the magnetic field generator 13a of the control unit 13 as an origin can be detected. As a position detection method, this embodiment uses a method which is common with or similar to a magnetic tracking method adopted by an already-known magnetic tracking device as a position tracker or a position/orientation tracker. Since the method is known, the explanation of the method is omitted here.

The indicator rod position detection transmission part 14b transmits a signal relating to the position of the indicator rod 12 detected by the indicator rod position detection part 14a. Further, the indicator rod position detection reception part 14c receives a transmitted signal. The signal received by the indicator rod position detection reception part 14c is inputted into the control part 17 via a signal line L. Here, as a transmission/reception unit used between the indicator rod position detection transmission part 14b and the indicator rod position detection reception part 14c, a well-known wireless-type transmission/reception unit which uses radio waves is used and hence, the detailed explanation of the unit is omitted.

Aheadposition detection part 15 is provided for detecting the position and the direction of the head mount 11 and is worn on the head mount 11. A signal detected by the head position detection part 15 is inputted into the control part 17 via the signal line L. In this manner, the position and the direction of the head mount 11 in the reference coordinate system can be detected. Here, the detection part per se has the substantially same constitution as the indicator rod position detection part 14a and hence, the explanation of the detection part is omitted.

An operation part 16 is served for the operation by the user M and is mounted on the indicator rod 12. Accordingly, the user M can operate the operation part 16 while holding the indicator rod 12. A signal generated when the user M operates the operation part 16 is inputted into the control part 17 via the signal line L.

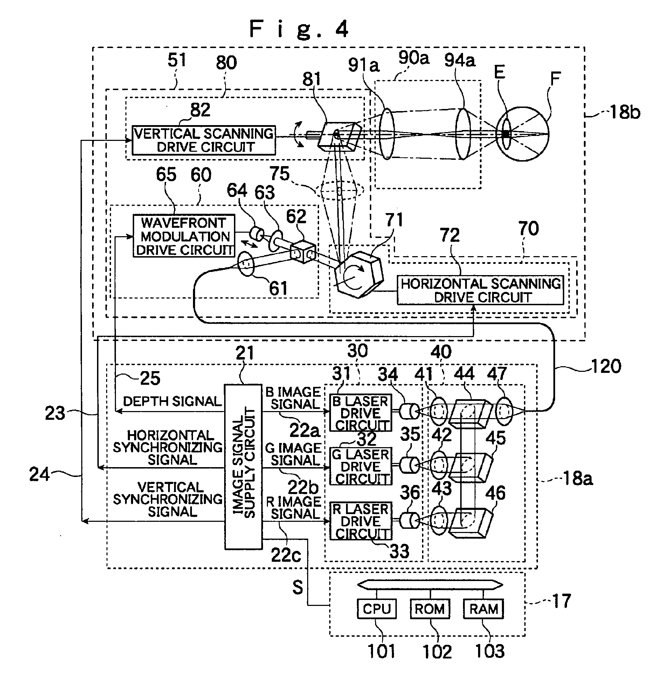

The control part 17 collectively controls the whole image display device stores programs and setting information, and is constituted of a CPU 101, a ROM 102, a RAM 103 and the like (see Fig. 4).

Further, as shown in Fig. 2, the image display part 18 includes an image light generating part 18a which forms image information and, thereafter, generates an optical flux, and a optical scanning part 18b which scans the generated optical flux in the horizontal direction as well as in the vertical direction for displaying an image and scans a converging point B of the scanned optical flux in which the scanned optical flux in the above-mentioned manner (hereinafter, referred to as "display-use scanned optical flux") is projected to a retina F of the user M. Here, the image light generating part 18a and the optical scanning part 18b are provided corresponding to each one of left and right pupils E (see Fig. 4) of the user M and are controlled by the control part 17. In this manner, the image display device of this embodiment is referred to as a so-called retinal scanning display.

Here, the constitution of the head mount 11, the constitution of the indicator rod 12 and the constitution of the control unit 13 are briefly explained.

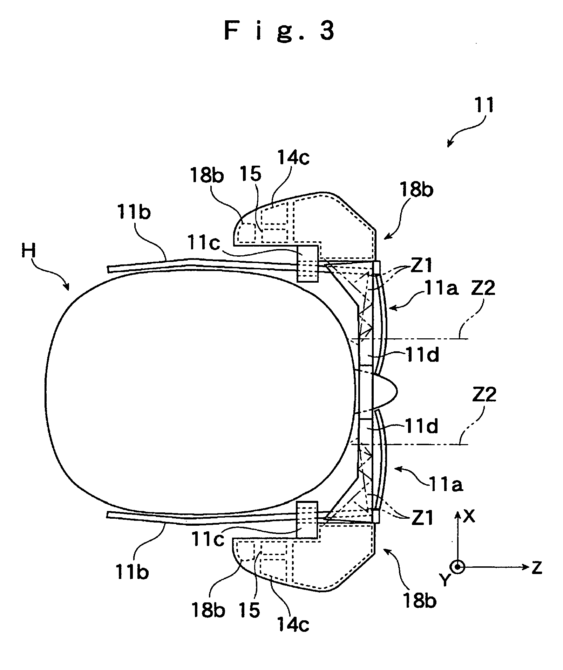

As shown in Fig. 3, the head mount 11 includes a glasses-shaped mount body 11a worn by the user M, the optical scanning parts 18b mounted on temple parts 11b of the mount body 11a by way of mounting members 11c and radiate image light, and half mirrors 11d which are arranged in front of eyes of the user M and reflect image light Z1 radiated from the optical scanning part 18b toward the eyes of the user M. Light Z2 from the outside arrives at the eyes of the user M by way of the half mirrors 11d. The user M can visually recognize an image displayed by the image light Z1 while visually recognizing an external field in a state that the user M wears the head mount 11.

Further, on the head mount 11, the indicator rod position detection reception part 14c of the indicator rod detection part 14, the head position detection part 15 and the optical scanning part 18b of the image display part are mounted.

The indicator rod position detection reception part 14c receives a signal from the indicator rod position detection transmission part 14b, and the received signal is inputted into the control part 17.

The head position detection part 15 is provided for detecting the position and the direction of the head mount 11 in the reference coordinate system, and the detected signal is inputted to the control part 17.

The optical scanning part 18b is provided for displaying an image which is constituted of a main virtual image Im and an auxiliary virtual image Is on retina of the user M who wears the head mount 11. The optical scanning part 18b mounted on the head mount 11 is explained in detail after explaining the control unit 13 described later.

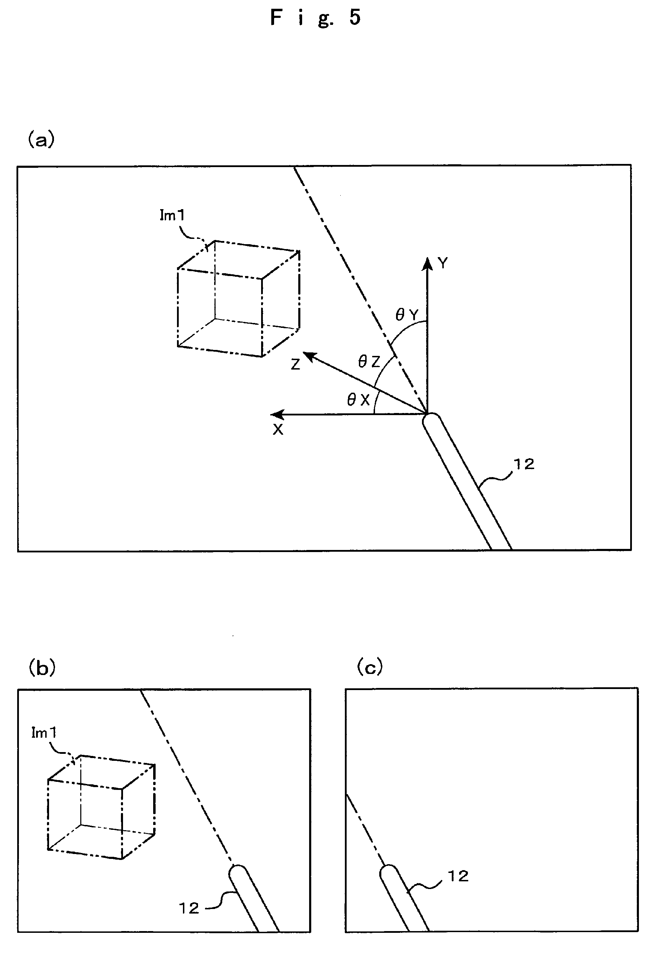

Here, the main virtual image Im is an object in an image which does not exist in a real space, but is displayed in a viewing field of the user M who wears the head mount 11 and is visually recognized by the user M. For example, in Fig. 5, an object image of a rectangular parallelepiped body indicated by a symbol "Im1" is one example. The main virtual image Im is visually recognized by the user M as if the object exists in a stationary state in the real space when the image is not handled. As described later, the main virtual image Im is an object whose position can be freely moved or whose direction can be freely changed by the user M. Here, in the explanation described below, with respect to the viewing of the object by the user that the main virtual image Im is displayed in the viewing field of the user M, such viewing may be simply expressed as viewing of the main visual image Im, the main virtual image Im in the viewing field or the main virtual image Im in the screen. These expressions are also used with respect to the auxiliary virtual image Is explained below in the same manner as the main virtual image Im.

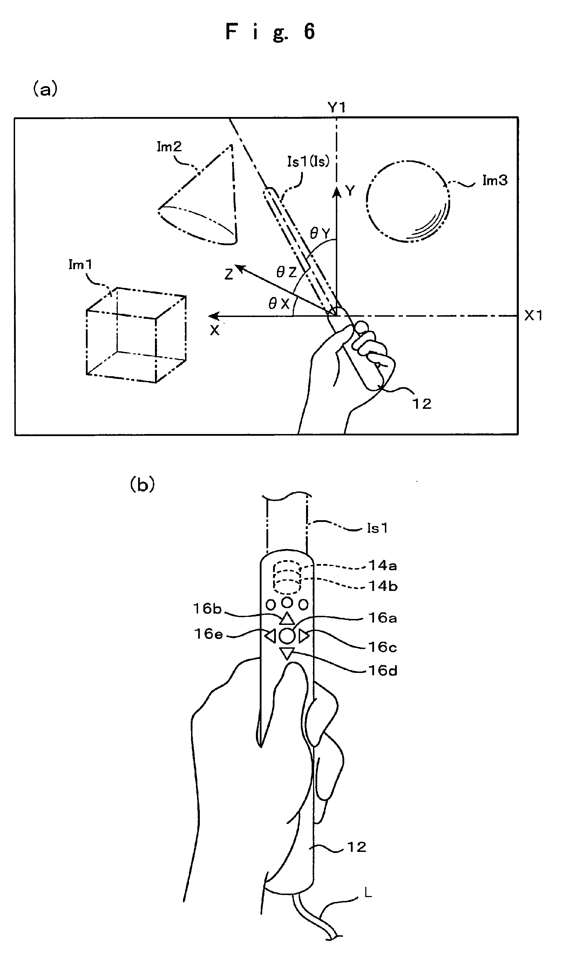

The auxiliary virtual image Is is an object in an image which does not exist in the real space in the same manner as the main virtual image but is displayed in a viewing field of the user M who wears the head mount 11 and is visually recognized by the user M. Out of such an object in the image, particularly, the auxiliary virtual image Is is visually recognized as an extended portion of the indicator rod 12 used by the user M, and is displayed corresponding to the position and the direction of the indicator rod 12. That is, the auxiliary virtual image Is is visually recognized by the user M as if the auxiliary virtual image Is is a portion of the indicator rod 12, and moves corresponding to the movement of the indicator rod 12. To be more specific, as shown in Fig. 6, the auxiliary virtual image Is is displayed on the extension of the direction of the indicator rod 12 from the position of the indicator rod 12 in the display coordinate system.

On the indicator rod 12, the indicator rod position detection part 14a and the indicator rod position detection transmission part 14b of the indicator rod detection part 14 are mounted. Further, the indicator rod 12 shown in Fig. 1 and Fig. 2 includes the operation part 16. By operating this operation part 16, the user M can perform operations described later such as an operation to move the main virtual image Im or the auxiliary virtual image Is which is displayed in the viewing field.

As shown in Fig. 6(b), the operation part 16 is mounted on a distal end side of the indicator rod 12 and includes a mode selection button switch 16a for selecting an operation mode. Further, as buttons used for operations in the respective modes, the operation part 16 includes an upper button switch 16b which is located on the upper side of the mode selection button switch 16a, a right button switch 16c which is located on the right side of the mode selection button switch 16a, a lower button switch 16d which is located on the lower side of the mode selection button switch 16a and a left button switch 16e which is located on the left side of the mode selection button switch 16a. By pushing these button switches, a signal corresponding to the pushed button is transmitted to the control part 17.

The mode selection button switch 16a is used for selecting the various modes, and the mode can be sequentially changed by pushing the mode selection button switch 16a. To be more specific, as shown in Fig. 6(a), one of an auxiliary virtual image selection mode, an auxiliary virtual image operation mode, an auxiliary virtual image color setting mode, a main virtual image operation mode, a new main virtual image setting mode, a main virtual image deletion mode, an image retention display setting mode and a contact determination setting mode can be selected.

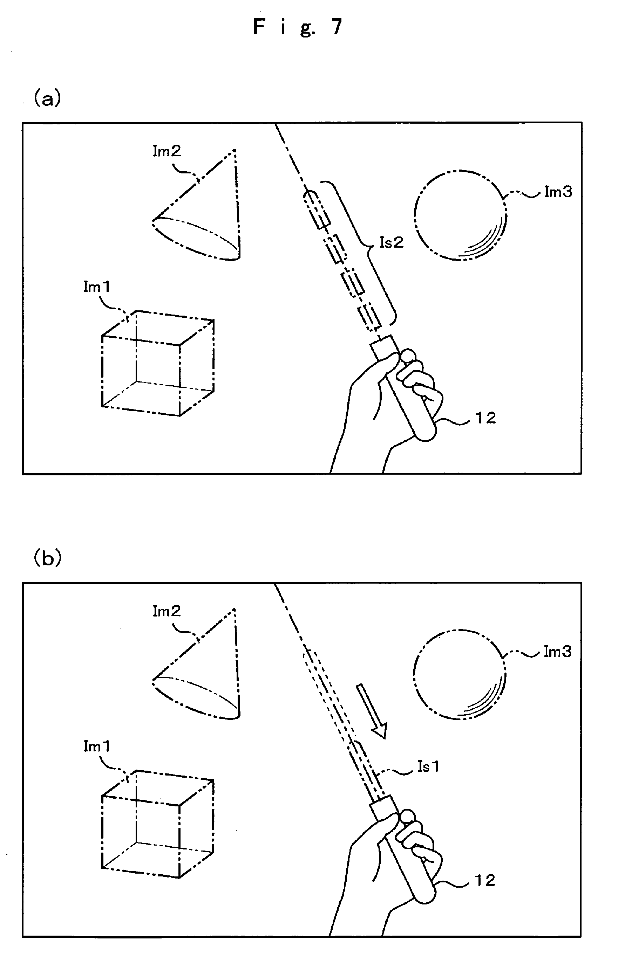

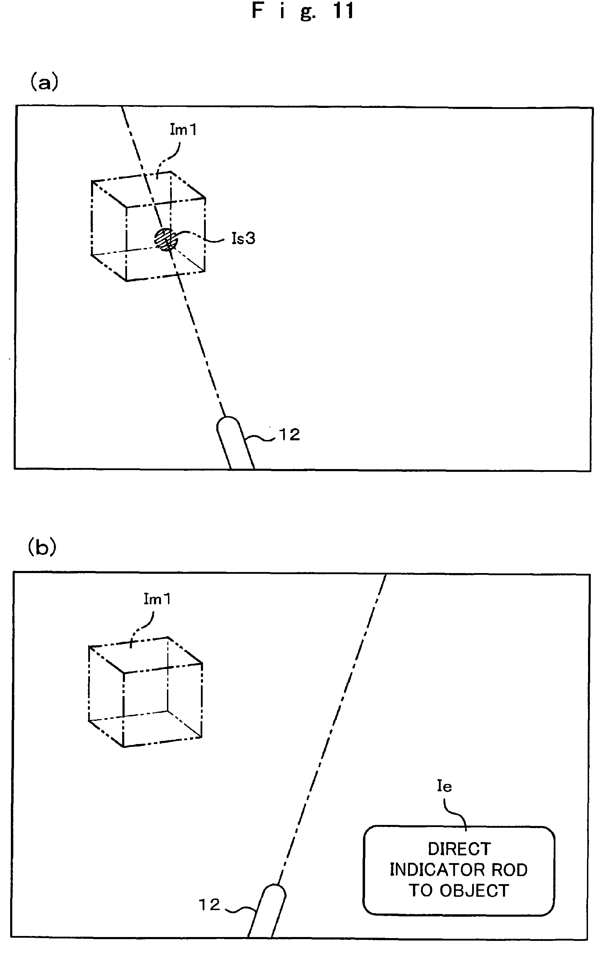

In the auxiliary virtual image selection mode, by pushing the right button switch 16c or the left button switch 16e of the operation part 16, a kind of auxiliary virtual image Is can be selected. To be more specific, one of an auxiliary virtual image Is1 which is displayed as one continuous rod as shown in Fig. 6(a), an auxiliary virtual image Is2 which is displayed as one rod formed of several intermittently arranged segments as shown in Fig. 7 (a) and an auxiliary virtual image Is3 which is displayed as one dotted line as shown in Fig. 11(a) can be selected.

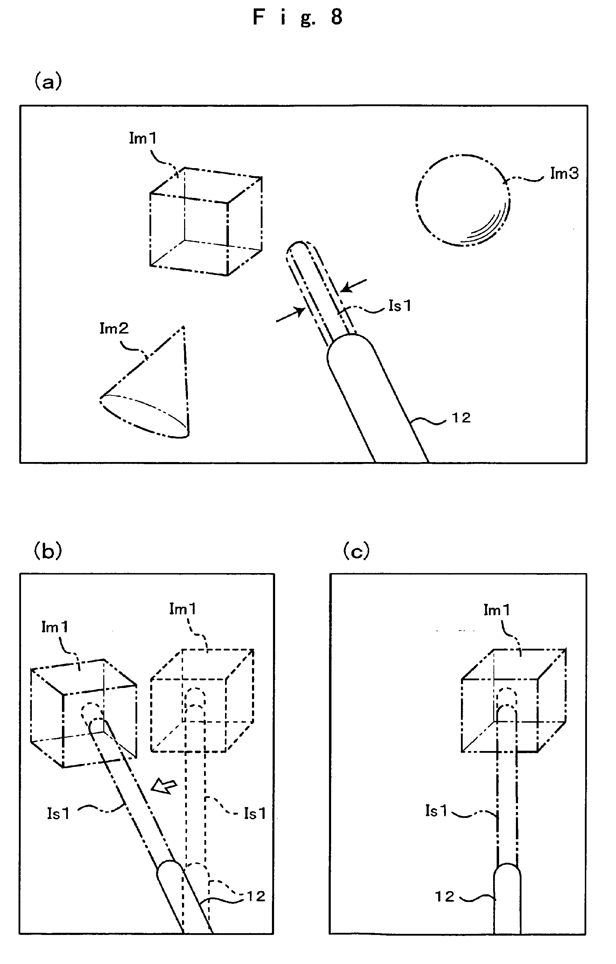

In the auxiliary virtual image operation mode, the shape of the selected auxiliary virtual image Is can be further changed. For example, when the auxiliary virtual image Is1 which is displayed as one continuous rod or the auxiliary virtual image Is2 which is displayed as one rod formed of several intermittently arranged segments is selected as the auxiliary virtual image Is, in the auxiliary virtual image operation mode, a length of the auxiliary virtual image Is1 is shortened by pushing the lower button switch 16d as shown in Fig. 7 (b) while the auxiliary virtual image Is1 is elongated by pushing the upper button switch 16b. Further, in the auxiliary virtual image operation mode, a size of the auxiliary virtual image Is1 is decreased by pushing the right button switch 16c as shown in Fig. 8(a) while the size of the auxiliary virtual image Is1 is increased by pushing the left button switch 16e. In this manner, the operation part 16 functions as an auxiliary virtual image length setting part which sets the length of the auxiliary virtual image Is or an auxiliary virtual image width setting part which sets the width of the auxiliary virtual image Is.

Further, in the auxiliary virtual image operation mode, when the auxiliary virtual image Is3 (see Fig. 11(a)) which is displayed as one dotted line is selected as the auxiliary virtual image Is, in the auxiliary virtual image operation mode, a diameter of the auxiliary virtual image Is is decreased by pushing the right button switch 16c while the diameter of the auxiliary virtual image Is3 is increased by pushing the left button switch 16e. Here, a position of the auxiliary virtual image Is3 which is displayed as one dotted line is a position which becomes an intersecting point between an extension of the direction of the indicator rod 12 from a position of the indicator rod 12 and the main virtual image Im in the display coordinates system.

In the auxiliary virtual image color setting mode, a color of the auxiliary virtual image Is is set to the colors different from each other sequentially by pushing the right button switch 16c or the left button switch 16e of the operation part 16. Accordingly, when the mode is changed by pushing the mode selection button switch 16a at a point of time that the color of the auxiliary virtual image is set to the desired color, the auxiliary virtual image Is is displayed by the color which is selected at the last. In this manner, the operation part 16 functions as an auxiliary virtual image color setting part for setting the color of the auxiliary virtual image Is.

In the main virtual image operation mode, a selection method of the main virtual image Im can be selected by pushing the right button switch 16c or the left button switch 16e. To be more specific, by pushing the right button switch 16c, the selection method assumes an independent selection state in which the main virtual image which becomes the object to be operated is individually selected, while by pushing the left button switch 16e, the selection method assumes a collective selection state in which the main virtual images Im which exist in the predetermined region are collectively selected at a time.

By pushing the upper button switch 16b in a state that the selection method of the main virtual image Im assumes the independent selection state, the main virtual image Im which is pointed by the auxiliary virtual image Is can be selected as the main virtual image Im to be operated. Further, as shown in Fig. 8(b) using broken lines, when the indicator rod 12 is moved in a state that the main virtual image Im1 is selected, the selected main virtual image Im1 integrally moves along with the indicator rod 12 and the auxiliary virtual image Is1 in the viewing field of the user M. That is, the selected main virtual image Im has a position thereof correlated with a position of the auxiliary virtual image Is. Further, by pushing the lower button switch 16d in a state that the main virtual image Im1 is selected, the selection of the main virtual image Im1 is canceled. In this manner, the operation part 16 functions as a main virtual image designation operation part which designates the main virtual image Im.

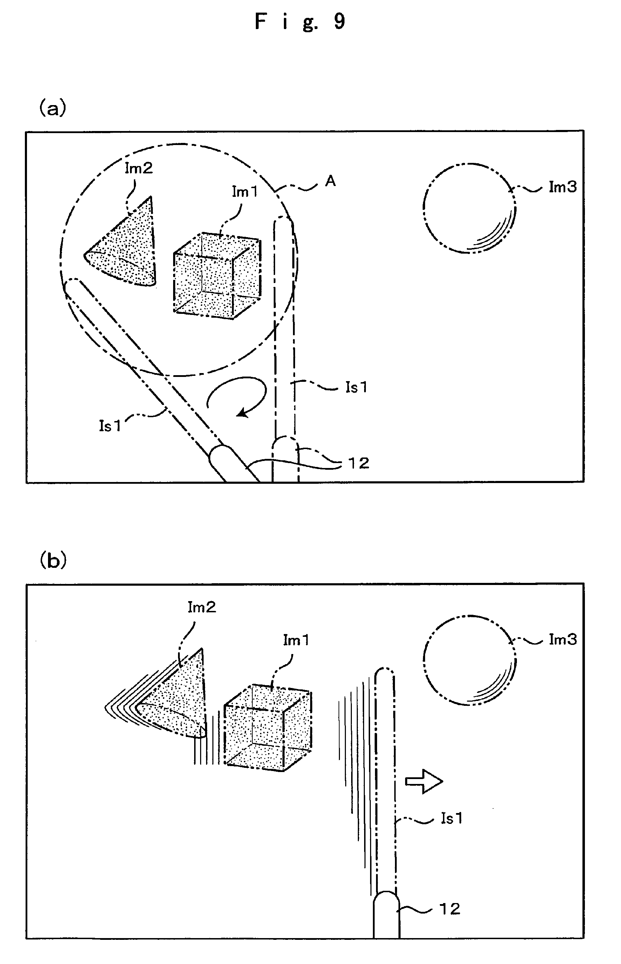

By pushing the upper button switch 16b in a state that the selection method of the main virtual image Im assumes the collective selection state, it is possible to acquire a state in which the predetermined region A to be selected can be surrounded by using a distal end of the auxiliary virtual image Is. Then, as shown in Fig. 9(a), when the indicator rod 12 is operated, the main virtual images Im1, Im2 in the surrounded region are selected. In a state that the main virtual images Im1, Im2 are selected, when a state in which the upper button switch 16b is pushed is canceled, the selection of a plurality of the main virtual images Im1, Im2 is established. In this embodiment, the established selection is indicated clearly by changing the color of the selected main virtual images Im1, Im2. Further, when the indicator rod 12 is moved in a state that the selection of the main virtual images Im1, Im2 is established, as shown in Fig. 9(b), the selected main virtual images Im1, Im2 integrally move along with the indicator rod 12 and the auxiliary virtual image Is in the viewing field of the user M. That is, the selected main virtual images Im1, Im2 have positions thereof correlated with the position of the auxiliary virtual image Is. Further, by pushing the lower button switch 16d in a state that the main virtual images Im1, Im2 are selected, the selection of the main virtual images Im1, Im2 is canceled. In this manner, the operation part 16 functions as a main virtual image selection range specifying part which specifies the main virtual image Im which exists in the trajectory of the auxiliary virtual image Is which moves in the display coordinate system along with the change of the position and the direction of the indicator rod 12.

In the new main virtual image setting mode, by pushing the right button switch 16c or the left button switch 16e, the desired main virtual image Im can be selected from a plurality of the main virtual images Im which are stored in the ROM 102 or the RAM 103. Here, in the ROM 102 or the RAM 103, a new main virtual image Im can be registered as needed, or a part or all of the registered main virtual images Imcan be deleted. Further, by pushing the upper button switch 16b in a state that the predetermined main virtual image Im is selected, the selected new main virtual image Im is displayed in the viewing field of the user M. On the other hand, by pushing the lower button switch 16d, the main virtual image Im which is displayed in the viewing field of the user M as a candidate to be newly displayed can be deleted.

In the main virtual image deletion mode, a deletion method of the main virtual image Im which is displayed in the viewing field of the user M can be selected. As the deletion method, there are an independent deletion method which individually selects the main virtual image Im to be operated to delete and a collective deletion method which deletes the main virtual images Im which exist in the predetermined region at a time. When the right button switch 16c is pushed, the deletion method assumes an independent delete state which is capable of individually selecting the main virtual image Im to delete while, when the left button switch 16e is pushed, the deletion method becomes a collective delete state which is capable of deleting the main virtual images Imwhich exist in the predetermined region at a time.

By pushing the upper button switch 16b in a state that the deletion method of the main virtual image Im assumes the independent delete state, the main virtual image Im which is pointed by the auxiliary virtual image Is can be selected as the main virtual image Im to be operated. Further, by pushing the upper button switch 16b again in a state that the main virtual image Im is selected, the selectedmain virtual image Im is deleted. Further, by pushing the lower button switch 16d in a state that the main virtual image Im is selected, the selection of the main virtual image Im is canceled.

By pushing the upper button switch 16b in a state that the deletion method of the main virtual image Im assumes the collective delete state, it is possible to acquire a state in which the main virtual images Im can be collectively deleted. In this state, when the indicator rod 12 is operated so that a region in which the main virtual image Im to be deleted is displayed is surrounded by using a distal end of the auxiliary virtual image Is, the main virtual images Im in the surrounded region are selected. In this state, by pushing the upper button switch 16b again, a plurality of the selected main virtual images Im is deleted. Further, by pushing the lower button switch 16d in a state that the main virtual image Imis selected, the selection of the main virtual images Im is canceled.

With respect to the image retention display setting mode, by pushing the right button switch 16c of the operation part 16, the image retention display mode is established, and by pushing the left button switch 16e, the image retention display mode is canceled. Further, by pushing the upper button switch 16b, image retention display time is increased while, by pushing lower button switch 16d, the image retention display time is decreased. An object of the image retention display setting mode is the auxiliary virtual image Is. However, when the main virtual image Im is correlated with the auxiliary virtual image Is, the main virtual image Im correlated with the auxiliary virtual image Is is also subject to image retention display.

In the contact determination setting mode, by pushing the right button switch 16c of the operation part 16, contact determination mode is set, while by pushing the left button switch 16e, the contact determination mode is canceled. Then, by pushing the upper button switch 16b, the occurring of contact is informed by change of color, while by pushing the lower button switch 16d, the occurring of contact is informed by a sound. Here, when the setting which informs the occurring of contact using the sound is not used, the following constitution is unnecessary. However, when the setting which informs the occurring of contact using the sound is used, a sound source part 19a indicated by a chain double-dashed line in Fig. 2 is mounted on the control unit and, at the same time, a speaker 19b indicated by a chain double-dashed line in Fig. 2 is mounted on the head wearable unit 11.

Here, in the contact determination setting mode, in a state in which the contact determination mode is set, by pushing the upper button switch 16b or the lower button switch 16d twice, the auxiliary virtual image Is is not displayed when it is determined that there is no position which becomes an intersecting point between an extending direction of the indicator rod 12 from a position of the indicator rod 12 in the display coordinate system and the main virtual image Im.

Next, the control unit 13 is explained.

The control part 17 and the image light generating part 18a of the image display part 18 are mounted on the control unit 13.

The control part 17 obtains the positions and directions of the head mount 11, the indicator rod 12, the main virtual image Im and the auxiliary virtual image Is in the reference coordinate system which uses the position of the control unit 13 as the origin based on signals inputted from the indicator-rod-position-detection reception part 14c, the head position detection part 15 and the operation part 16. The control unit 13 is configured to be worn on the waist, and the position of the waist is a basic position indicating the posture of the user M and hence, the waist position is favorably used as the position of the origin of the reference coordinate system. Here, the obtained information of the respective positions and directions are inputted to the image light generating part 18a.

Further, the control part 17 performs processing which obtain the positions and directions of the main virtual image Im and the auxiliary virtual image Is as well as processing which, when the position of a main virtual image Im is moved, a new main virtual image Im is displayed or the displayed main virtual image Im is deleted, obtains or eliminates the position of the main virtual image Im after movement or the position of the newly displayed main virtual image Im. Here, the change of the shape of the auxiliary virtual image Is or the like is processed in the image light generating part 18a described later.

As shown in Fig. 4, the image light generating part 18a includes an image signal supply circuit 21 (corresponding to one example of an image information forming apparatus) which forms image information of an image including a main virtual image Im and an auxiliary virtual image Is to be displayed based on signals from the control part 17 and an optical flux generator which generates optical fluxes corresponding to the image information formed by the image signal supply circuit 21 and is constituted of a light source part 30 and a light synthesizing part 40.

To the image signal supply circuit 21, so-called image signals S related to the main virtual image Im and the auxiliary virtual image Is including the positions and directions of the main virtual image Im and the auxiliary virtual image Is which are displayed in the viewing field of the user in the reference coordinate system or the like are inputted from the control part 17. The image signal supply circuit 21 generates the respective signals which constitute elements for synthesizing the display image based on the inputted signals. To be specific, in the image signal supply circuit 21, the image information such as respective image signals 22a to 22c of blue (B), green (G), red (R) or the like are formed, and the image information is outputted to the optical scanning part 18b by way of the light source part 30 described later for respectively making the three signals (B, G, R) 22a to 22c into optical fluxes and the light synthesizing part 40 described later for combining these three optical fluxes into one optical flux to generate an arbitrary optical flux. Further, in the image signal supply circuit 21, the horizontal synchronizing signal 23, the vertical synchronizing signal 24, the depth signal 25 and the like are outputted to the optical scanning part 18b.

The image signal supply circuit 21 forms the image information for displaying the image including the main virtual image Im and the auxiliary virtual image Is in the following manner.

The main virtual image Im is displayed as if the main virtual image Im exists in a real space in a stationary state unless otherwise beingmoved using the indicator rod 12. However, along with the movement of the user M, the position of the head mount 11 moves and hence, the relative position of the main virtual image Im with respect to the head mount 11 changes. In this manner, even though the position of the main virtual image Im in the reference coordinate system is not moved, there may be a case in which the position of the main virtual image Im in the display coordinate system is moved. Accordingly, the image signal supply circuit 21 obtains the position of the main virtual image Im in the display coordinate systembased on the information of the position and direction of the main virtual image Im in the reference coordinate system and the position and direction of the head mount 11 inputted from the control part 17 and generates the image information for displaying the image including the main virtual image Im using the obtained position information.

Here, as shown in Fig. 1(a), (b) or Fig. 3, in the embodiment, as a display coordinate system, a coordinate system in which the frontward direction is the Z axis, the direction toward the top of the head is the Y axis, the direction toward the left pupil from the right pupil is the X axis, and the center between the both pupils is the origin is used. That is, the directions of the Z axis, Y axis and X axis of the display coordinate system change along with the change of the direction of the user M. In such a display coordinate system, for example, the display position and direction of the indicator rod 12 are specified by coordinates (X, Y, Z) of a predetermined point in the indicator rod 12 (for example, a distal end of the indicator rod 12) and angles formed with the respective coordinate axes (θx, θy, θz).

The auxiliary virtual image Is is displayed on the extension of the indicator rod 12 and moves in the viewing field of the user M. To display the auxiliary virtual image Is in such a moving state, it is necessary to specify the positions and directions of the auxiliary virtual image Is at respective points of time. The image signal supply circuit 21 obtains the positions and directions of the auxiliary virtual image Is in the display coordinate system at respective points of time based on the information of the positions and directions of the auxiliary virtual image Is and the positions and directions of the headmount 11 in the reference coordinate systemat respective points of time. With the specification of the positions of the auxiliary virtual image Is at the respective points of time in this manner, by performing the similar processing as the processing in displaying the above-mentioned auxiliary virtual image Is in the stationary state, the image information for displaying the image including the auxiliary virtual image Is in a moving state in the viewing field of the user M can be formed.

Here, the main virtual image Im is also moved by the operation using the indicator rod 12. However, the main virtual image Im in a moving state can be treated in the same manner as the auxiliary virtual image Is in a moving state and hence, the explanation thereof is omitted.

As shown in Fig. 6(a), as an auxiliary virtual image Is displayed in the viewing field of the user M, for example, there is an auxiliary virtual image Is1 which continuously extends to a predetermined position on the extension direction in the direction of the indicator rod 12 from the distal end position of the indicator rod 12 in the display coordinate system. Further, as shown in Fig. 7(a), as an auxiliary virtual image Is, there is an auxiliary virtual image Is2 which intermittently extends to a predetermined position on the extension direction in the direction of the indicator rod 12 from the distal end position of the indicator rod 12 in the display coordinate system. Further, as an auxiliary virtual image Is, there is an auxiliary virtual image Is3 which is displayed as one dotted line at a position which becomes an intersecting point between an extending direction of the indicator rod 12 from a distal end position of the indicator rod 12 in the display coordinate system and the main virtual image Im. A signal corresponding to the operation of the indicator rod 12 using the operation part 16 is inputted to the image signal supply circuit 21 via the control part 17. The image signal supply circuit 21 forms the image information for displaying the image including the corresponding auxiliary virtual image Is in the viewing field of the user M based on the signal.

Further, as explained previously, with the use of the operation part 16, the operation for changing a length or a width of the auxiliary virtual image Is can be performed. To the image signal supply circuit 21, the signal corresponding to the operation using the operation part 16 of the indicator rod 12 is inputted via the control part 17, and the image signal supply circuit 21 forms the image information for displaying the image including the corresponding auxiliary virtual image Is in a state that the color of the image is changed based on the signal.

Here, when the main virtual image (here, referred to as correlated main virtual image) Im correlated with the auxiliary virtual image Is is generated by the operation of the operation part 16, as has been explained previously, the correlated main virtual image Im is dealt in a manner in which the correlated main virtual image Im integrally moves with the auxiliary virtual image Is. When the operation of the correlation is performed, signal related to the correlation operation is inputted to the control part 17 from the operation part 16. The control part 17 obtains the position and direction of the correlated main virtual image Im in the reference coordinate system assuming that the correlated main virtual image Im integrally moves with the auxiliary virtual image Is. That is, with respect to the correlated main virtual image Im, in the same manner as the auxiliary virtual image Is, the position and direction thereof can be obtained based on signals of the position and direction of the correlated main virtual image Im of the indicator rod 12 in the reference coordinate system. The image signal supply circuit 21 forms the image information for displaying the image including the correlated main virtual image Im in the viewing field of the user M based on the signals of the position and direction of the correlated main virtual image Im in the reference coordinate system obtained by the control part 17.

Further, when the image retention display mode is set, depending on changes in the position and direction of the indicator rod 12, a trajectory of the auxiliary virtual image Is which moves in the display coordinate system is displayed as an image retention for a predetermined time. Information that the image retention display mode is set and information on the contents of the setting are inputted to the image signal supply circuit 21 from the operation part 16 of the indicator rod 12 via the control part 17. The image signal supply circuit 21 forms the image information for displaying the image including the image retention in the viewing field of the user M based on the signal.

Further, when the contact determination mode is set, when it is determined that a portion of the auxiliary virtual image Is contacts a portion of the main virtual image Im in the display coordinate system, the color of the auxiliary virtual image Is or the color of the main virtual image Im is changed. Information that the contact determination mode is set and information on the contents of the setting are inputted to the image signal supply circuit 21 from the operation part 16 of the indicator rod 12 via the control part 17. The image signal supply circuit 21 forms the image information for displaying the image including the auxiliary virtual image Is or the main virtual image Im in a state that the color thereof is changed based on the signal.

Further, when it is determined that there is no position which becomes an intersecting point between an extending direction of the indicator rod 12 from a position of the indicator rod 12 in the display coordinate system and the main virtual image Im, the auxiliary virtual image Is may not be displayed. In a state of this setting, when the determination is made by the control part 17, information that the determination is made is inputted from the control part 17 to the image signal information.

Further, when it is determined that there is no position which becomes an intersecting point between an extending direction of the indicator rod 12 from a position of the indicator rod 12 in the display coordinate system and the main virtual image Im, a virtual image Ie (see Fig. 11(b)) which informs the determination may be displayed. In a state of this setting, when the determination is made by the control part 17, information that the determination is made is inputted to the image signal supply circuit 21 from the control part 17. The image signal supply circuit 21 forms the image information for displaying the image including the informing virtual image based on the signal.

Further, with the use of the operation part 16 of the indicator rod 12, the color of the auxiliary virtual image Is can be set. When the color of the auxiliary virtual image Is is changed, the signal indicating that the color of the auxiliary virtual image Is is changed is inputted to the image signal supply circuit 21 from the operation part 16 of the indicator rod 12 via the control part 17. The image signal supply circuit 21 forms the image information for displaying the image including the auxiliary virtual image Is having a set color in the viewing field of the user M based on the signal.

Further, the image light generating part 20 includes a light source part 30 which forms three image signals (B, G, R) 22a to 22c outputted from the image signal supply circuit 21 into optical fluxes respectively, and an optical synthesizing part 40 which generates an arbitrary optical flux by combining these three optical fluxes into one optical flux.

The light source part 30 includes a B laser 34 which generates a blue optical flux, a B laser drive circuit 31 which drives the B laser 34, a G laser 35 which generates a green optical flux, a G laser drive circuit 32 which drives the G laser 35, an R laser 36 which generates a red optical flux, and an R laser drive circuit 33 which drives the R laser 36. Here, the respective lasers 34, 35, 36maybe constitutedof a semiconductor laser or a solid-state laser with a harmonics generation mechanism, for example. Here, when the semiconductor laser is used, it is possible to modulate the intensity of the optical flux by directly modulating the drive current, while when the solid-state laser is used, it is necessary to perform the intensity modulation of the optical fluxes by respectively providing external modulator to the respective lasers.

The optical synthesizing part 40 includes collimation optical systems 41, 42, 43 provided for collimating the laser beams incident from the light source part 30, dichroic mirrors 44, 45, 46 provided for synthesizing the collimated laser beams, and a coupling optical system 47 which guides a synthesized light into the optical fiber 120.

The laser beams radiated from the respective lasers 34, 35, 36 are, after respectively being collimated by the collimation optical systems 41, 42, 43, incident on the dichroic mirrors 44, 45, 46. Thereafter, using these dichroic mirrors 44, 45, 46, the respective laser beams are reflected on the dichroic mirrors 44, 45, 46 or are allowed to pass through the dichroic mirrors 44, 45, 46 selectively based on wavelengths thereof.

To be specific, the blue laser beams radiated from the B laser 34 is, after being collimated by the collimation optical system 41, incident on the dichroic mirror 44. The green laser beams radiated from the G laser 35 is incident on the dichroic mirror 45 via the collimation optical system 42. The red laser beams radiated from the R laser 36 is incident on the dichroic mirror 46 via the collimation optical system 43.

The laser beams of three primary colors which are respectively incident on these three dichroic mirrors 44, 45, 46 are reflected on the dichroic mirrors 44, 45, 46 or are allowed to pass through the dichroic mirrors 44, 45, 46 selectively based on wavelengths thereof, arrive at the coupling optical system 47 and are converged, the converged optical fluxes are outputted to the optical fiber 120 and are outputted to the optical scanning part 18b.

The optical scanning part 18b is, as explained above, mounted on the head wearable unit 11.

The optical scanning part 18b includes a scanning part 51 for scanning the optical fluxes generated by the image light generating part 18a in the horizontal direction and in the vertical direction for image display and a relay optical system 90a which again converges the scanning optical fluxes for display scanned by the scanning part 51 and radiates the converged optical fluxes to the pupil E of the user M.

The scanning part 51 includes a wavefront modulation part 60 for modulating the wavefront curvature of the optical fluxes radiated from the light synthesizing part 40, a horizontal scanning part 70 for scanning the optical fluxes whose wavefront curvature is modulated in the horizontal direction, a second relay optical system 75 for converging the optical fluxes scanned in the horizontal direction by the horizontal scanning part 70 and a vertical scanning part 80 for scanning the laser optical fluxes incident by way of the second relay optical system 75 in the vertical direction.

The wavefront modulation part 60 includes a second collimation optical system 61 for collimating the optical fluxes transmitted by the optical fiber 120 from the image light generating part 18a again, a beam splitter 62 for splitting the optical fluxes collimated in this manner into transmitted light and reflected light which is reflected in the vertical direction of the transmitted light, a lens system 63 having positive refracting power having a focal length f for converging the optical fluxes reflected by the beam splitter 62 and a movable mirror 64 for reflecting the optical fluxes converged by the lens system 63 in the incident direction.

The wavefront modulation part 60 further includes a wavefront modulation drive circuit 65 for displacing the movable mirror 64 in the direction toward the lens system 63 or in the direction away from the lens system 63.

In the wavefront modulation part 60 constituted in the above-mentioned manner, the optical fluxes incident from the image light generating part 18a are reflected by the beam splitter 62 and pass through the lens system 63 and, thereafter, are reflected by the movable mirror 64. Then, again, after passing through the lens system 63, the optical fluxes pass through the beam splitter 62 and are radiated to the horizontal scanning part 70.

The wavefront modulation part 60 can change the wavefront curvature of the optical fluxes which are incident from the second collimation optical system 61 and advance toward the horizontal scanning part 70 by changing the distance between the lens system 63 and the movable mirror 64 in the wavefront modulation drive circuit 65. In this manner, with the provision of the wavefront modulation part 60, by performing the wavefront modulation, when a virtual image such as a main virtual image Im or an auxiliary virtual image Is is displayed on the extension of the indicator 12, it is possible to allow the user M to observe the virtual image such as the main virtual image Im or the auxiliary virtual image Is as if the virtual image exists on a real space. For example, in the display of the auxiliary virtual image Is, the wavefront modulation corresponding to the depth distance in the extension direction of the indicator 12 is performed. Here, the wavefront modulation drive circuit 65 is driven in response to a depth signal outputted from the video signal supply circuit 21.

Further, the horizontal scanning part 70 and the vertical scanning part 80, to bring the optical fluxes incident from the wavefront modulation part 60 into a state which allows the optical fluxes to be projected as an image, scan the optical fluxes in a horizontal direction as well as in a vertical direction to form the optical fluxes into scanned optical fluxes for display.

The horizontal scanning part 70 includes an polygon mirror 71 for scanning the optical fluxes in the horizontal direction and a horizontal scanning drive circuit 72 which drives the polygon mirror 71, while the vertical scanning part 80 includes a Galvanomirror 81 for scanning the optical fluxes in the vertical direction and a vertical scanning drive circuit 82 which drives the Galvano mirror 81. Here, the horizontal scanning drive circuit 72 and the vertical scanning drive circuit 82 respectively drive the polygon mirror 71 and the Galvano mirror 81 based on a horizontal synchronizing signal 23 and a vertical synchronizing signal 24 which are outputted from the image signal supply circuit 21.

Further, the image display device includes a second relay optical system 75 which relays the optical fluxes between the horizontal scanning part 70 and the vertical scanning part 80. The optical fluxes incident from the wavefront modulation part 60 are scanned in the horizontal direction using the polygon mirror 71, pass through the second relay optical system 75 and are scanned by the Galvano mirror 81 in the vertical direction, and are radiated to the relay optical system 90a as the scanned optical fluxes for display.

The relay optical system 90a includes lens systems 91a, 94a having positive refractive power. The scanned optical fluxes for display radiated from the vertical scanning part 80, using the lens system 91a, have center lines thereof arranged parallel to each other and are respectively converted into converged optical fluxes. Then, using the lens system 94a, the respective optical fluxes are arranged substantially parallel to each other and, at the same time, are converted such that the center lines of these optical fluxes are converged on the pupil E of the viewer M.

According to the image display device of the embodiment which has been explained heretofore, the user M can visually recognize an external field in a state that the user M wears the head mount 11 and, at the same time, can visually recognize the main virtual image Im and the auxiliary virtual image Is which are displayed by the image light projected on the retina F by the optical system.

Next, a using state of such an image display device is explained.

As shown in Fig. 1, first of all, the user M wears the head wearable unit 11 on the head H and, at the same time, wears the control unit 13 on the waist. Then, the user M grasps the indicator rod 12.

As shown in Fig. 3, in this state, light Z2 from the external field is incident on the eye of the user M and hence, the user can visually recognize the state of the external field. When the image display device of the embodiment is operated in this state, an image light Z1 generated by the image display device is incident on the eye of the user M and hence, the image display device assumes a state in which the user M can visually recognize the displayed image.

For example, as shown in Fig. 5(a), a state in which the main virtual image Im1 is displayed on the viewing field is taken into consideration.

Themain virtual image Im1 is positioned at a predetermined position of the reference coordinate system in a stationary state. That is, to the user M, the main virtual image Im1 appears to be held in a stationary state in the same manner as the real image which exists in the viewing field. Accordingly, for example, when the user M faces another direction as shown in Fig. 5 (c) from a state in which the user M faces the main virtual image Im1 as shown in Fig. 5(b), although the main virtual image Im1 is the image displayed by the image light Z1 projected from the optical scanning part 18b mounted on the head mount 11, the main virtual image Im1 disappears from the viewing field as if the main virtual image Im1 is a real obj ect in a stationary state.

Here, the control part 17 treats the main virtual image Im1 in a stationary state assuming that the position thereof in the reference coordinate system is fixed. Further, the control part 17 obtains the direction of the viewing field of the user M wearing the head mount based on the position and the direction of the head mount 11 in the reference coordinate system detected by the head position detection part 15.

Here, the coordinate system which uses a predetermined point of the viewing field of the user M obtained here at this point as the origin of a display coordinate system. Then, the position and the direction of the main virtual image Im1 in this coordinate system is obtained, and the main virtual image Im1 is displayed at the position. Due to such a constitution, the main virtual image Im1 is displayed as if the main virtual image Im1 is held in a stationary state in a real space in the same manner as a real object. This constitution is also applied to the auxiliary virtual image Is.

Here, a case in which the user M operates the main virtual image Im1 using the indicator rod 12 is taken into consideration. For example, when the main virtual image Im1 in the viewing field is moved, the user M, first of all, selects the main virtual image operation mode by pushing the mode selection button switch 16a. Here, when the number of the main virtual images Im1 to be moved is one, the user M pushes a right button switch 16c thus allowing the image display device to assume a state in which the main virtual image Im1 is independently selected. When the upper button 16b is pushed in such a state, the main virtual image Im indicated by the auxiliary virtual image Is can be selected as the main virtual image Im1 of the object to be operated. Then, as shown in Fig. 8(b), as indicated by a broken line, in the state that the main virtual image Im1 is selected, when the user M moves the indicator rod 12, the selected main virtual image Im1 integrally moves in the viewing field of the user M along with the indicator rod 12 and the auxiliary virtual image Is1.

Further, when the user M desires to collectively select the main virtual image Im in the predetermined region, the user M pushes a left button switch 16e thus making the image display device into a state which is capable of comprehension selection. In this state, when the user M pushes an upper button switch 16b, the image display device assumes a state in which it is possible to surround a predetermined region A (see Fig. 9) to be selected with a distal end of the auxiliary virtual image Is. Then, as shown in Fig. 9, when the user M operates the indicator rod 12, the main virtual images Im1, Im2 in the inside of the surrounded region are selected. In this state, when the state in which the upper button switch 16b is pushed is canceled, the selection of the plurality of the main virtual images Im1, Im2 is confirmed, and the selected main virtual images Im1, Im2 change colors. Then, in the state that the selection is confirmed, by moving the indicator rod 12, it is possible to integrally move the selected main virtual images Im1, Im2 in the viewing field of the user M along with the indicator rod 12 and the auxiliary virtual image Is.

Further, the image display device in this embodiment has various functions. For example, the image retention display setting mode is explained.

The user M can change the mode by pushing the mode selection button switch 16a. Accordingly, the user M selects the image retention display setting mode by pushing the mode selection button switch 16a. Then, in a state in which the image retention display setting mode is selected, when the right button switch 16c of the operation part 16 is pushed, the image retention display mode is established. By setting the image retention display mode in this manner, when the user M moves the auxiliary virtual image Is, the video image of the auxiliary virtual image Is remains as image retention for a predetermined time. In this manner, by allowing the image retention to remain, the delicate position adjustment of the auxiliary virtual image Is can be easily performed.

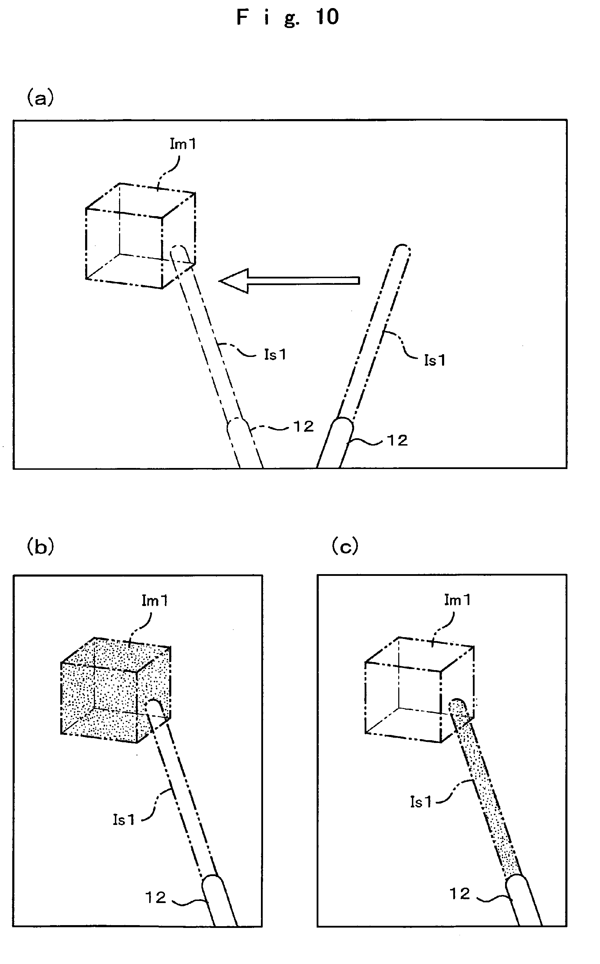

Further, when the user M selects the contact determination setting mode (see Fig. 10), in a state that the mode is selected, the user M pushes the right button switch 16c of the operation part 16. Then, the contact determination setting mode is established. Here, for example, when the user M pushes the upper button switch 16b, the setting in which the occurring of contact is informed by the change of color is established. In this state, when the user M moves the indicator rod 12, along with the motion, the auxiliary virtual image Is moves. Then, when a portion of the auxiliary virtual image Is contacts the main virtual image Im, the auxiliary virtual image Is changes the color. the control part obtains the position and the direction of the auxiliary virtual image Is and the main virtual image Im in the reference coordinate system at any time, and can determine whether or not the image display device assumes a state in which the both images contact each other based on these data and the shapes of the auxiliary virtual image Is and the main virtual image Im. When it is determined that the both images contact each other, the control part changes the color of the auxiliary virtual image Is. Accordingly, on paying attention to the change of the color of the auxiliary virtual image Is, it is possible to easily recognize that the image display device assumes a state in which the main virtual image Im can be selected by the auxiliary virtual image Is.

Further, in the auxiliary virtual image selection mode, by sequentially pressing the right button switch 16c or the left button switch 16c of the operation part 16, the user M can select an auxiliary virtual image Is1 which is displayed as one continuous rod as shown in Fig. 6(a), an auxiliary virtual image Is2 which is displayed as one rod formed of several intermittently arranged segments shown in Fig. 7(a) and an auxiliary virtual image Is3 which is displayed as one dotted line as shown in Fig. 11 (a) .

Further, in the auxiliary virtual image operation mode, a length of the auxiliary virtual image Is1 is shortened by pushing the lower button switch 16d as shown in Fig. 7(b) while the auxiliary virtual image Is1 is elongated by pushing the upper button switch 16b. Further, a width of the auxiliary virtual image Is1 is decreased by pushing the right button switch 16c as shown in Fig. 8 (a) while the width of the auxiliary virtual image Is1 is increased by pushing the left button switch 16e.

Further, in the auxiliary virtual image color setting mode, a color of the auxiliary virtual image Is is set to the colors different from each other sequentially by pushing the right button switch 16c or the left button switch 16e of the operation part 16.

The image display device according to the present invention has been explained heretofore. However, the present invention is not limited to the above-mentioned embodiment, and various modifications can be made.

For example, in the image display device in the above-mentioned embodiment, the origin of the reference coordinate system is a predetermined point of the control unit which is worn by the viewer on the waist. As the origin or a predetermined reference point, in view of minimizing the position detection error, a position where the motion is stable is favorable. Then, the waist position is favorably uses as the origin position since the waist position is considered as the most stable position of the human as the viewer. However, another point may be set as the origin. For example, a predetermined point of the viewer's wrist may be set as the origin. Although the wrist is a position which moves in more complicated manner than the waist position, when the wrist shades the inside of the viewing field, the display image is presented as if the display image is fixed to the wrist.

Here, the origin of the reference coordinate system, that is, the predetermined reference point may be a position other than the predetermined position of the control unit worn on the waist or the predetermined position of the head mount provided that the origin is a predetermined point in a real space. However, when the predetermined point in the real space is used as the origin of the reference coordinate system, it is necessary to obtain the relationship among the positions of the origin, the head mount and the control unit as accurately as possible.

Further, in the image display device of the above-mentioned embodiment, the indicator rod position detection reception part is mounted on the control unit worn by the viewer on the waist and hence, the viewer can freely move. However, for example, the image display device may be an image display device which is mounted on a head mount and is used by a viewer while sitting on a predetermined seat or an image display device which fixes a viewing field of a viewer and is used in a state that the viewer looks into an observation window, for example.

In the former image display device, a fixed point such as a position of the seat where the viewer sits on may be used as the origin of the three-dimensional coordinate system. In this case, the origin is always set at the seat position and hence, the position and the direction of the indicator rod may be specified using the seat position as reference. Accordingly, it is unnecessary to specify the moving position of the viewer and hence, it is unnecessary to mount the indicator rod position detection reception part on the control unit.

Further, the latter image display device is an image display device used in a manner that the viewer looks into the observing window and hence, in the image display device in which the viewing field of the viewer is fixed, a predetermined point in the viewing field of the viewer is used as the origin of the coordinate system. In this case, the display coordinate system per se becomes the reference coordinate system and hence, the position and the direction of the indicator rod may be specified using the origin of the coordinate system as reference. Accordingly, in this case also, it is unnecessary to specify the moving position of the viewer and hence, it is unnecessary to mount the indicator rod position detection reception part on the control unit. Further, the image display device may have the constitution which does not use a head unit part such as the head mount of the above-mentioned embodiment.

## Claims

1. An image display device allowing a viewer to simultaneously observe a real image formed by an external light and a virtual image formed by an image light by projecting the image light based on image information on a retina of the viewer while allowing the external light to pass through the image display device, the image display device comprising:
an indicator which is capable of changing a position and a direction thereof;
an indicator detection part which detects the position and the direction of the indicator; and
an image display part which forms image information in which an auxiliary virtual image corresponding to the position and the direction of the indicator is arranged on a display coordinate system along with a main virtual image of an object to be displayed and which projects an image light based on the image information on the retina of the viewer.

2. An image display device according to claim 1, wherein the indicator detection part is configured to detect the position and the direction of the indicator in the display coordinate system, and
the image display part includes:
an image information forming apparatus which forms the image information in which the auxiliary virtual image is arranged on the extension of the direction of the indicator from the position of the indicator in the display coordinate system along with the main virtual image of the object to be displayed in the display coordinate system,
an optical flux generator which generates an optical flux corresponding to the image information formed by the image information forming apparatus, and
an optical system which projects the optical flux on the retina of the viewer.

3. An image display device according to claim 2, wherein the image display device includes a head wearable part to be worn on the head of the viewer, and at least the optical system out of the image display part is arranged in the head wearable part.

4. An image display device according to claim 3, wherein the image display device includes a head position detection part which detects a position and a direction of the head wearable part, and
the image information forming apparatus is configured to form the image information which arranges the main virtual image at a predetermined position on a reference coordinate system with a predetermined reference point set as the center, changes the position and the direction of the main virtual image on the display coordinate system corresponding to the change of the position and the direction of the head wearable part in the reference coordinate system, and changes the position and the direction of the auxiliary virtual image on the display coordinate system corresponding to the change of positions and the directions of the head wearable part and the indicator in the reference coordinate system.

5. An image display device according to claim 4, wherein the predetermined reference point is a predetermined point on a real space.

6. An image display device according to claim 4, wherein the image display device includes a reference unit wearable on a portion other than the head which constitutes a human body of the viewer, and
the reference unit is the predetermined reference point.

7. An image display device according to claim 2, wherein the image information forming apparatus forms the image information in which the auxiliary virtual image is arranged in a continuously extending manner from a position of the indicator in the display coordinate system to a predetermined position in the extending direction of the indicator.

8. An image display device according to claim 2, wherein the image information forming apparatus forms the image information in which the auxiliary virtual image is arranged in an intermittently extending manner from a position of the indicator in the display coordinate system to a predetermined position in the extending direction of the indicator.

9. An image display device according to claim 7, wherein the image display device includes an auxiliary virtual image length setting part which sets a length of the auxiliary virtual image, and the image information forming apparatus forms, when the length of the auxiliary virtual image is set by the auxiliary virtual image length setting part, the image information in which the auxiliary virtual image which extends to the predetermined position corresponding to the set length is arranged.

10. An image display device according to claim 7, wherein the image display device includes an auxiliary virtual image width setting part which sets a width of the auxiliary virtual image, and the image information forming apparatus forms, when the width of the auxiliary virtual image is set by the auxiliary virtual image width setting part, image information in which the auxiliary virtual image having a width corresponding to the set width is arranged.

11. An image display device according to claim 7, wherein the image display device includes a main virtual image designation operation part which designates the main virtual image, and
the image information forming apparatus correlates the main virtual image designated by the main virtual image designation operation part and the auxiliary virtual image, and changes a position and a direction of the main virtual image corresponding to the changes of the position and the direction of the auxiliary virtual image in the display coordinate system.

12. An image display device according to claim 7, wherein the image display device includes a main virtual image selection range specifying part which specifies the main virtual image existing within a trajectory of the auxiliary virtual image which moves on the display coordinate system corresponding to the changes of the position and the direction of the indicator, and
the image information forming apparatus changes color of the main virtual image specified by the main virtual image selection range specifying part.

13. An image display device according to claim 12, wherein the image information forming apparatus forms the image information which makes the trajectory of the auxiliary virtual image which moves on the display coordinate system corresponding to changes of the position and the direction of the indicator as a retention image for a predetermined time.

14. An image display device according to claim 7, wherein the image information forming apparatus forms, when it is determined that a portion of the auxiliary virtual image contacts a portion of the main virtual image on the display coordinate system, the image information which changes color of the auxiliary virtual image or the main virtual image.

15. An image display device according to claim 7, wherein the image display device includes a sound source part which, when it is determined that a portion of the auxiliary virtual image contacts a portion of the main virtual image on the display coordinate system, informs the determination using sounds.

16. An image display device according to claim 2, wherein the image information forming apparatus forms the image information in which the auxiliary virtual image is arranged at a position which becomes an intersecting point between an extending direction of the indicator from a position of the indicator in the display coordinate system and the main virtual image.

17. An image display device according to claim 2, wherein the image information forming apparatus forms the image information in which, when it is determined that there is no position which becomes an intersecting point between an extending direction of the indicator from a position of the indicator in the display coordinate system and the main virtual image, the auxiliary virtual image is not displayed.

18. An image display device according to claim 2, wherein the image information forming apparatus forms the image information in which, when it is determined that there is no position which becomes an intersecting point between an extending direction of the indicator from a position of the indicator in the display coordinate system and the main virtual image, a virtual image which informs the determination is arranged on the display coordinate system along with the main virtual image.

19. An image display device according to claim 1, wherein the optical system includes a wavefront modulation part which modulates a wavefront curvature of the optical flux and is configured to perform the wavefront modulation corresponding to a depth in an extending direction of the indicator.

20. An image display device according to claim 2, wherein the image display device includes an auxiliary virtual image color setting part which sets a color of the auxiliary virtual image, and
the image information forming apparatus forms, when it is determined that color of the auxiliary virtual image is set by the auxiliary virtual image color setting part, the image information in which the auxiliary virtual image of the set color is arranged along with the main virtual image.

21. An image display device according to claim 1, wherein the indicator detection part includes at least three orthogonally crossed coils for detecting an AC magnetic field generated by an AC magnetic field generator provided to the indicator, and detects the position and the direction of the indicator based on intensity of the AC magnetic field detected by the three orthogonally crossed coils generated by the AC magnetic field generator.

22. An image display device according to claim 1, wherein the image display device is a retinal scanning display in which the optical system includes a scanning part which scans the optical flux two-dimensionally and projects the optical flux scanned by the scanning part on the retina of the viewer.
